# EUROPEAN PATENT SPECIFICATION

(11) **EP 1 390 308 B1**
(45) Date of publication and mention of the grant of the patent: **03.08.2005**
(21) Application number: 01939085.5
(22) Date of filing: 16.05.2001
(51) Int. Cl.: C03B 5/04, C03B 5/237, C03B 3/00

(54) **EXHAUST POSITIONED AT THE DOWNSTREAM END OF A GLASS MELTING FURNACE**
ABGASKANAL DER AM STROMABWÄRTIGEN ENDE EINES GLASSCHMELZOFENS ANGEBRACHT IST
SYSTEME D'EVACUATION POSITIONNE A L'EXTREMITE AVAL D'UN FOUR DE FUSION DU VERRE

(43) Date of publication of application: 25.02.2004
(73) Proprietor: OWENS CORNING, Toledo, Ohio 43659 (US); THE BOC GROUP, INC., Murray Hill, New Jersey 07974 (US)
(72) Inventor: BAKER, David J., Newark, OH 43055 (US); ADAMS, Harry P., Granville, OH 43023 (US); LEBLANC, John R., Maumee, OH 43537 (US)
(74) Representative: Jacob, Reuben Ellis
(86) International application number: PCT/US2001/015967
(87) International publication number: WO 2002/092521

(56) References cited:
- EP-A- 0 359 003
- WO-A-96/10097
- DE-U- 9 206 502
- SU-A- 1 836 603
- US-A- 4 481 024
- US-A- 4 540 361

## Description

This invention relates to a glass-melting furnace of the type in which glass batch is deposited at one end and molten glass is removed from the other end. More particularly, this invention relates to a glass-melting furnace having at least one gas burner for melting the glass batch.

Glass-melting furnaces of many types have been commonly employed to melt glass-forming materials in the manufacture of glass products, such as fiberglass, container glass, flat glass and other types of glass. Such a glass-melting furnace typically includes a charger to introduce glass batch, at least one burner to melt the glass batch into molten glass, and at least one exhaust stack to remove combustion gases from the furnace. In a cross-fired furnace, heat is introduced into the furnace from burners positioned on opposing sides of the furnace. The heat melts the glass, or batch, in the furnace. The glass batch is generally added to the furnace at the rear, or charging end of the furnace to allow for optimal melting of the glass batch to molten glass. The molten glass is removed from the front, or downstream end of the furnace, through a glass evacuation channel referred to as a throat in furnaces for melting glass for manufacturing fiberglass, and referred to as a waist in furnaces for melting glass for manufacturing flat glass.

The combustion fumes and gases released from the decomposition of the glass-forming raw materials are transferred or removed from the furnace through one or more exhaust stacks positioned on opposite sides near the rear or charging end of the furnace, that is, on the opposite end of the furnace from the throat or point of glass discharge from the furnace. The reason for positioning the exhaust stacks in the rear of the furnace is to conserve energy while still maintaining acceptable melting of the batch. PCT Application No. WO-A1-96110097 describes an apparatus and process for treating solid residues. The apparatus comprises burners in a first heating area used to heat slag. The gaseous substances formed in this process are removed through an exhaust gas duct and recycled. The melt then runs into a second and then third chamber to undergo further processing. By exhausting the gases from the charge end of the furnace, there is the opportunity to recover significant amounts of the energy from all the exhaust gases generated in the furnace. However, positioning the exhaust stacks at the charge end of the furnace leads to batch being entrained in the gases of combustion, and thus fouling of the exhaust stacks or other equipment, and potentially increasing the particulate from the furnace exhaust system. It would thus be desirable to design a more efficient furnace that does not have the disadvantages of known furnaces.

### SUMMARY OF THE INVENTION

The above objects as well as other objects not specifically enumerated are achieved by the glass-melting furnace according to claim 1 and the method according to claim 15.

By the present invention the residence time of exhaust gases in the glass-melting furnace is increased, thereby providing a more cost effective heating and melting of the glass-forming material.

Various other objects and advantages of this invention will become apparent to those skilled in the art from the following detailed description of the preferred embodiments, when read in light of the accompanying drawings.

### BRIEF DESCRIPTION OF THE DRAWINGS

Figure 1 is a cross-sectional elevational view of a glass-melting furnace in accordance with the present invention.
Figure 2 is a cross-sectional plan view of the glass-melting furnace of Figure 1 taken along line 2-2, with a portion of the roof shown for clarity.
Figure 3 is a schematic elevational view of an alternate embodiment of a glass-melting furnace in accordance with the present invention.
Figure 4 is a schematic plan view of the glass-melting furnace of Figure 3 taken along line 4-4.
Figure 5 is a cross-sectional end view in elevation of an alternate embodiment of a glass-melting furnace in accordance with the present invention.
Figure 6 is a schematic plan view of another alternate embodiment of the furnace having an exhaust connected through the discharge end wall of the furnace.
Figure 7 is a graph showing the temperature profile of a prior art glass-melting furnace compared with the temperature profile of a glass-melting furnace in accordance with the present invention.

### DETAILED DESCRIPTION OF THE

### PREFERRED EMBODIMENTS

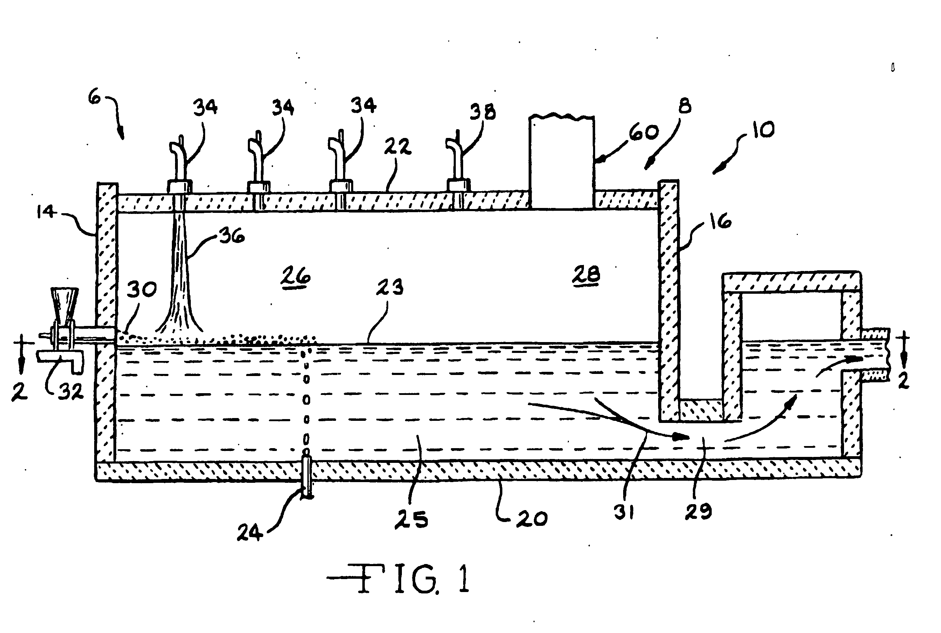

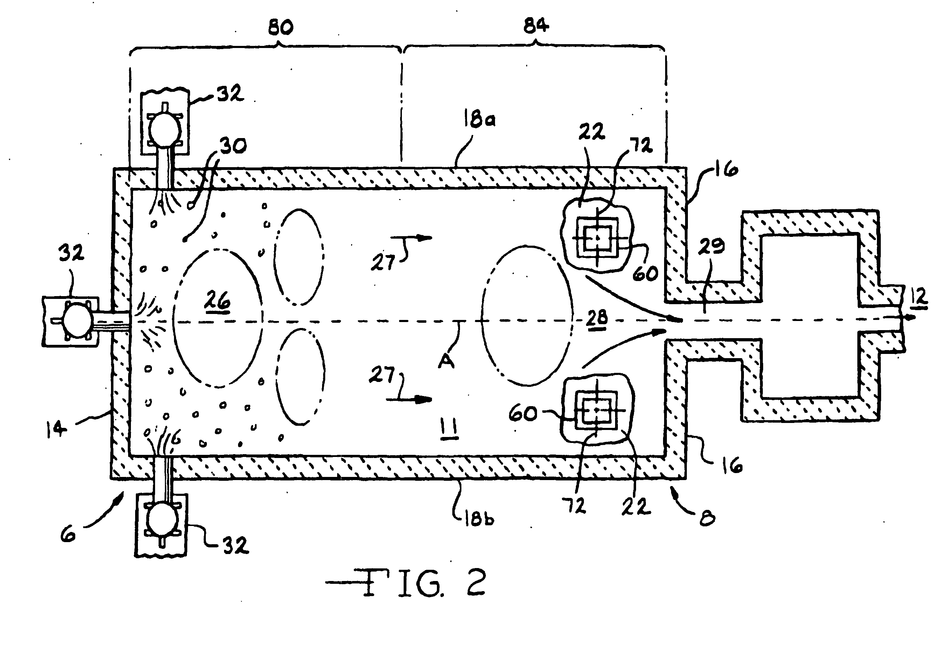

Referring to Figures 1 and 2, there is shown a glass-melting furnace 10, which can be used to manufacture fiberglass, container glass, flat glass and other types of glass. The glass-melting furnace 10 is operative to provide molten glass to a glass forehearth 12 or other glass.processing equipment. In considering the figures, it will be appreciated that for purposes of clarity certain details of construction are not provided in view of the fact that such details are conventional and well within the skill of the art once the invention is disclosed and explained.

The glass-melting furnace 10 preferably includes an elongated channel 11 defined by a charge end wall 14 and a discharge end wall 16, two side walls 18a and 18b, a floor 20 and a roof 22. The roof 22 is preferably operatively connected to the first or charge end wall 14 and the second or discharge end wall 16. The charge end wall 14 is positioned at an upstream end 6 of the glass-melting furnace 10, where the glass-forming material is introduced or charged into the furnace. The discharge end wall 16 is positioned at a downstream end 8 of the glass-melting furnace 10, where the discharge of the molten glass from the furnace occurs. The upstream end 6 of the glass-melting furnace 10 is a charge end. As used in this specification and claims, the term "downstream end" means the end of the furnace from which the molten glass is discharged. The glass-melting furnace 10 is preferably made from appropriate refractory materials such as alumina, silica, alumina-silica, zircon, zirconia-alumina-silica and the like. The roof 22 of the glass-melting furnace 10 has a conventional curvilinear cross-sectional shape or crowned shape when viewed transverse to a longitudinal axis "A" of the channel, although the roof 22 may be of any suitable design. The roof 22 of the glass-melting furnace 10 is positioned above a surface 23 of molten glass 25. As is well known in the art, the glass-melting furnace 10 may optionally include one or more bubblers 24 and/or electrical boost electrodes (not shown). The bubblers 24 and/or electrical boost electrodes increase molten glass circulation and glass melting rates.

The glass-melting furnace 10 preferably includes two molten glass zones, a generally upstream melting zone 26 and a generally downstream fining zone 28. The melting zone 26 is considered the upstream zone of the glass-melting furnace 10 wherein the glass-forming material 30 is charged into the glass-melting furnace 10 using a charger or charging device 32. The charging device 32 may be of any type suitable for depositing glass-forming material 30 into the glass-melting furnace 10. The glass forming material 30 may be a mixture of raw materials typically used in the manufacture of glass, such as for example glass batch. It will be appreciated that the glass-forming material 30 make-up is dependent on the type of glass product (not shown) being produced. Normally, the material includes silica-containing materials including finely ground scrap glass commonly referred to as cullet. Other glass-forming materials including feldspar, limestone, dolomite, soda ash, potash, borax and alumina may also be used. To alter the properties of the glass product, a relatively minor amount of arsenic, antimony, sulfates, carbon and/or fluorides may also be added. It will be appreciated that the molten glass 25 generally flows from the upstream end 6 of the glass-melting furnace 10 to the downstream end 8 of the glass-melting furnace 10, as indicated by the arrows 27.

Any suitable number and type of charging devices 32 may be employed to deliver the glass-forming material 30 into the glass-melting furnace 10. The illustrated glass-melting furnace 10 includes three charging devices 32 positioned in the charge end wall 14 and the two side walls 18a and 18b, respectively. As shown, the illustrated charging devices 32 are generally positioned at the upstream end 6 of the glass-melting furnace 10. The glass-forming material 30 is preferably delivered onto the surface 23 of molten glass 25.

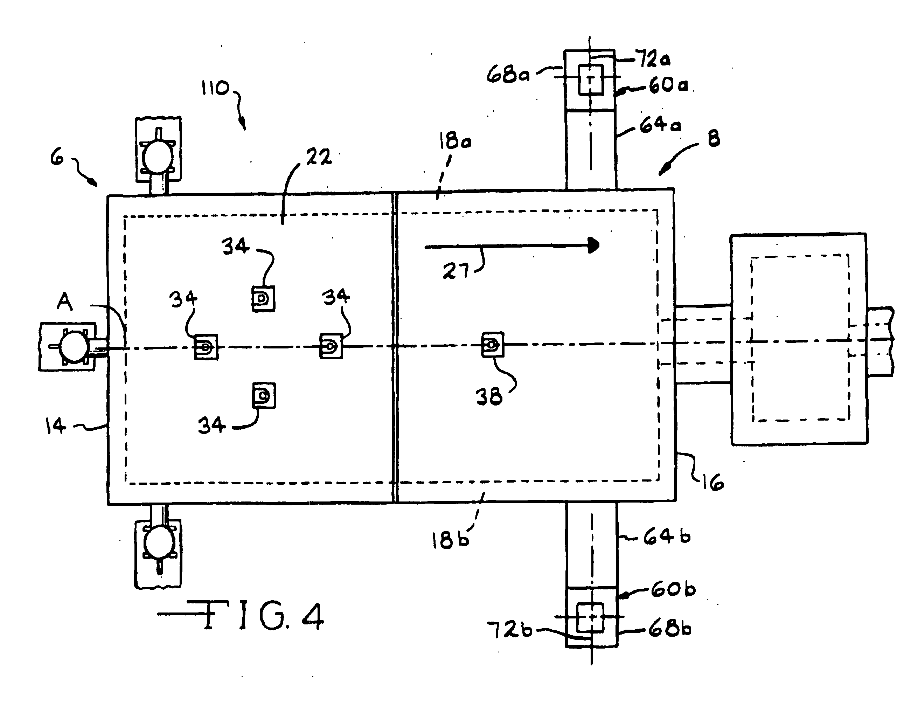

The glass-forming material 30 forms a batch layer of solid or semi-melted particles on the surface of the molten glass 25 in the melting zone 26 of the glass-melting furnace 10. The floating solid batch particles of the glass-forming material 30 are melted principally by at least one burner, although a plurality of burners 34 are preferably used, as shown in Figures 1 and 4. The burners 34 are preferably oxygen-fuel burners, although any suitable type of burner may be employed. The burners 34 preferably provide a flame 36 of controlled shape and length. In a preferred embodiment of the invention the burners at the charging end 6 are mounted through the roof 22, as shown in Figures 1, 3 and 4. However, it is to be understood that the burners can be mounted in or through the charge wall 14 or the side walls 18a and 18b of the glass-melting furnace 10. The burners 34 melt the glass-forming material 30 and, at the same time, maintain the operating temperature of the surrounding refractory material within acceptable operating limits. Significant quantities of combustion gases are generated by the oxidation of the gas from the burner.

After the glass-forming material is melted by the flames 36 and by heat radiated from other parts of the furnace, the molten glass flows from the melting zone 26 in the direction of directional arrow 27 to the fining zone 28. The molten glass exits the furnace 10 through the furnace throat 29, or through a channel known as a waist in the flat glass industry, as indicated by the directional arrow 31. In a preferred embodiment for specific glasses, the fining zone 28 includes at least one downstream burner 38 mounted in the roof 22 of the glass melting furnace 10. The downstream burner 38 can be similar in design to the burners 34. Optionally, any one or more of the upstream burners 34 can be mounted at an angle of up to about 20 degrees to the vertical to maximize convective and radiative heat transfer to the glass forming batch material. Likewise, the downstream end burner 38 can be mounted at an angle of up to about 20 degrees to the vertical to minimize and/or control foam formation on the glass surface 23 when operating with certain types of glasses such as fiberglass.

The glass-melting furnace 10 includes at least one exhaust 60, positioned at the downstream end 8, for removing the gases of combustion from the furnace. It is to be understood that alternatively a plurality of exhausts can be employed. For the glass-melting furnace 10 shown in Figures 1 and 2, the roof 22 of the glass-melting furnace 10 supports the exhausts 60. In a preferred embodiment of the invention, the exhausts are positioned outside the sidewalls 18a and 18b and supported in a different manner, as will be explained below.

In a preferred embodiment of the invention, the exhausts 60 are exhaust stacks for educting the combustion fumes and gases released from the decomposition of the glass-forming raw materials. It is to be understood that the exhausts can be any suitable type of opening or conduit for removing the fumes and gases from the furnace. Once the fumes and gases are removed from the furnace, they can optionally be treated in a manner to produce an environmentally friendly effluent. Where an exhaust stack is used, it can have a quadrilateral cross section, such as a square cross-section, although the exhausts 60 can have any suitable cross-sectional shape. In a preferred embodiment of the invention, the centerlines 72 of the exhausts are positioned at least about 70 percent of the distance from the charge end wall 14 of the glass-melting furnace to the discharge end wall 16 of the glass-melting furnace, as shown, for example, in Figure 2. More preferably, the centerlines 72 of the exhausts are positioned at least about 80 percent of the distance from the charge end wall to the discharge end wall.

One of the advantages of providing the exhaust 60 in communication with the downstream end of the furnace is that there is a lower probability of any glass-forming materials to be entrained with the fumes and combustion gases. This is because the total mass flow of combustion products generated in the furnace of the invention does not pass over the glass forming materials, but instead only the combustion products from those burners upstream from the glass forming materials will pass over the glass-forming materials. In a conventional furnace the velocity of the gases will be greatest above the unmelted glass forming materials, thus enhancing the entrainment of these materials. In contrast, in the furnace of the invention, the velocity of the gases will not necessarily be the greatest above the glass-forming materials. Also, any glass forming materials entrained with the fumes and combustion gases will have a chance to settle out as the gases travel from the charge end 6 of the furnace to the downstream end 8. Another advantage in positioning the exhaust 60 in communication with the downstream end, particularly where the majority (more than 50 percent) of the burners 34 are positioned in the upstream end of the furnace, is that separation of the exhaust from the heat source eliminates a thermal short circuit that would occur if the burners and exhaust were positioned at the same end of the furnace.

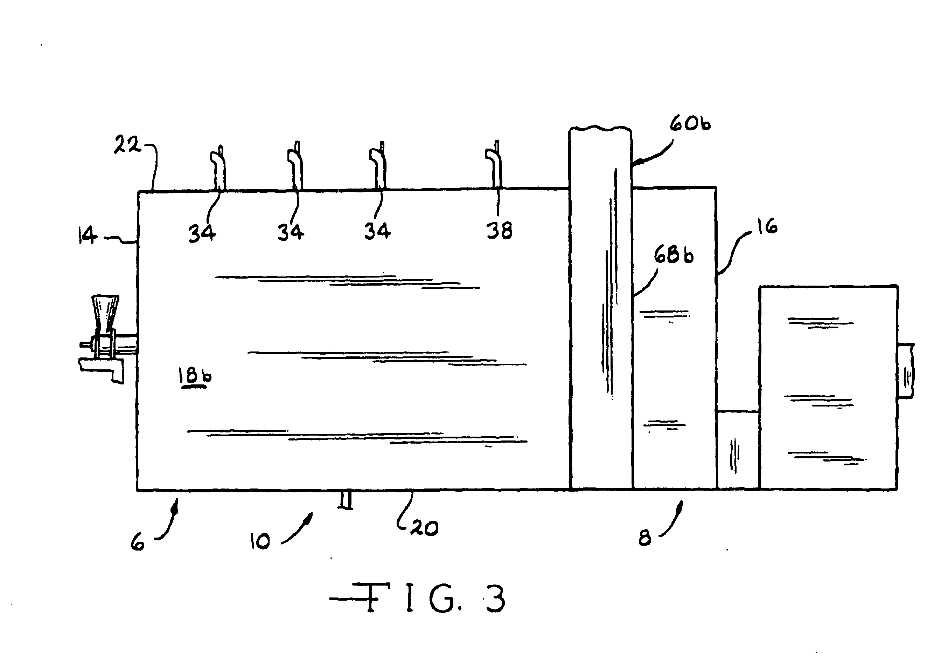

An alternate embodiment of the glass-melting furnace 110 is shown in Figures 3 and 4. Features of the glass-melting furnace 110 having reference numbers the same as or similar to those of the glass-melting furnace 10 illustrated in Figures 1 and 2 have a similar function to those same features of furnace 10, unless otherwise indicated. The glass-melting furnace 110 includes two exhausts 60a and 60b. The exhausts 60a and 60b are in communication with the glass-melting furnace 110 and are operative to exhaust the gases of combustion produced by the burners 34 and 38. The exhausts 60a and 60b are positioned laterally outside the sidewalls 18a and 18b, respectively.

The exhausts 60a and 60b shown in Figures 3 and 4 include generally horizontal portions 64a and 64b and generally vertical portions 68a and 68b, respectively. The generally vertical portions 68a and 68b are spaced apart from the side walls 18a and 18b by the generally horizontal portions 64a and 64b, respectively. It should be noted that the exhausts 60a and 60b include centerlines 72a and 72b, respectively. As is the case for the furnace 10 shown in Figures 1 and 2, the centerlines 72a and 72b are positioned at least about 70 percent of the distance from the charge end wall 14 of the glass-melting furnace 110 to the discharge end wall 16 of the glass-melting furnace 110, and more preferably at least about 80 percent of the distance from the charge end wall to the discharge end wall. Although the exhaust stacks are shown as being laterally spaced apart from the sidewalls, the exhausts could be integrally formed in the side walls themselves. In such a case, the innermost portion of the generally vertical portions 68a and 68b of the exhausts 60a and 60b would be included in the sidewalls 18a and 18b, respectively.

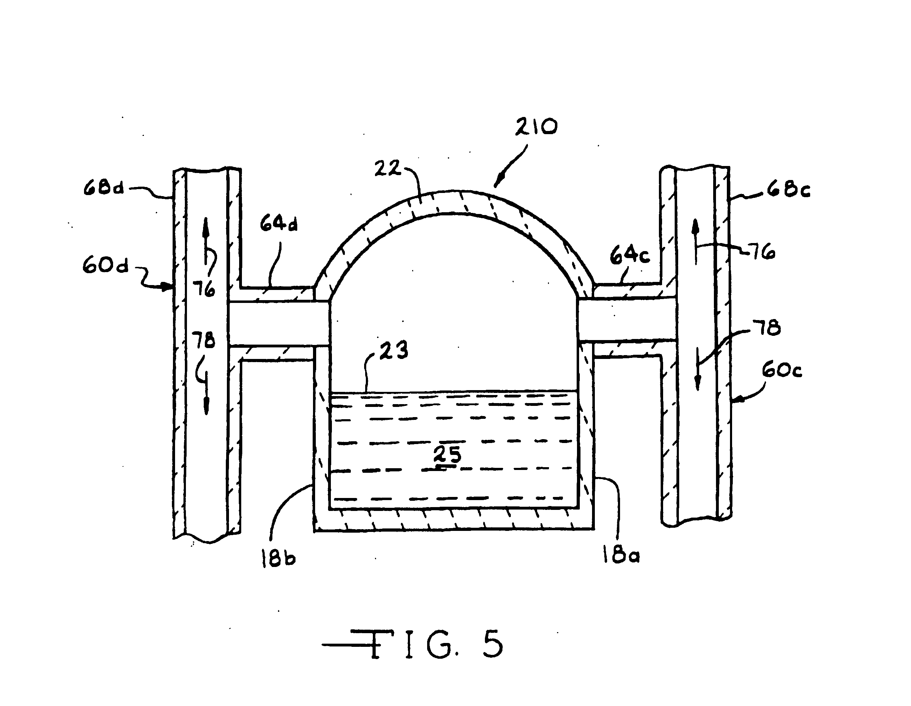

Yet another alternate embodiment of the glass-melting furnace 210 is shown in Figure 5. Features of the glass-melting furnace 210 having reference numbers the same as or similar to those of the glass-melting furnace 10 and the glass-melting furnace 110 have a similar function to those features of furnaces 10 and 110, unless otherwise indicated. The glass-melting furnace 210 shown in Figure 5 includes exhausts 60c and 60d, which have a quadrilateral cross section, although they may have any suitable cross-sectional shape.

The exhausts 60c and 60d can be supported in any suitable manner. The exhausts 60c and 60d may be positioned at any suitable location adjacent or on the discharge end wall 16 and/or the side walls 18 to exhaust the gases of combustion from the furnace. As shown in Figure 5, they can be separated laterally from the sidewalls 18. The exhausts 60c and 60d preferably include generally horizontal portions 64c and 64d and generally vertical portions 68c and 68d, respectively. The generally horizontal portions 64c and 64d are positioned above the surface 23 of the molten glass 25. The generally vertical portions 68c and 68d are spaced apart from the discharge end wall 16 and the side walls 18 by the generally horizontal portions 64c and 64d, respectively. In a preferred embodiment, the generally vertical portions 68c and 68d are operative to receive the gases of combustion and allow for removal in either the generally upward direction (indicated by arrows 76) or the generally downward direction (indicated by arrows 78).

The glass-melting furnaces 10, 110 and 210 all operate substantially similarly to produce molten glass 25. In operation, glass-forming material 30 is introduced to the upstream end 6 of the glass-melting furnace. Then, the glass-forming material is heated with the burners 34. The one or more burners 34 are preferably located at the upstream end 6 of the furnace. The burners 34 form gases of combustion, which are exhausted from the downstream end 8 of the glass-melting furnace.

The glass-melting furnaces 10, 110 and 210 can be operated by introducing glass-forming material 30 to a charge half 80 of the furnace, as shown in Figure 2. As used in this context, the charge half 80 of the glass-melting furnace is understood to be that half of the glass-melting furnace nearest to the charge end wall 14. The glass-forming material 30 is heated with the one or more burners 34 located in the charge half 80 of the furnace. The burners 34 provide energy and form gases of combustion. The majority of the energy from all the burners associated with the furnace is introduced into the charge half 80 of the glass-melting furnace. Preferably, the energy from the burners introduced into the charge half of the furnace is at least twice the energy from the burners introduced to the discharge half of the furnace. The exhausts are positioned to exhaust the gases of combustion from the discharge half 84 of the furnace. As used in this context, the discharge half 84 of the glass-melting furnace is understood to be that half of the glass-melting furnace nearest to the discharge end wall 16. It can be seen that the exhausting of the combustion gases through the exhausts creates a flow of combustion gases within the furnace in a direction from the charge end wall of the furnace to the discharge wall of the furnace.

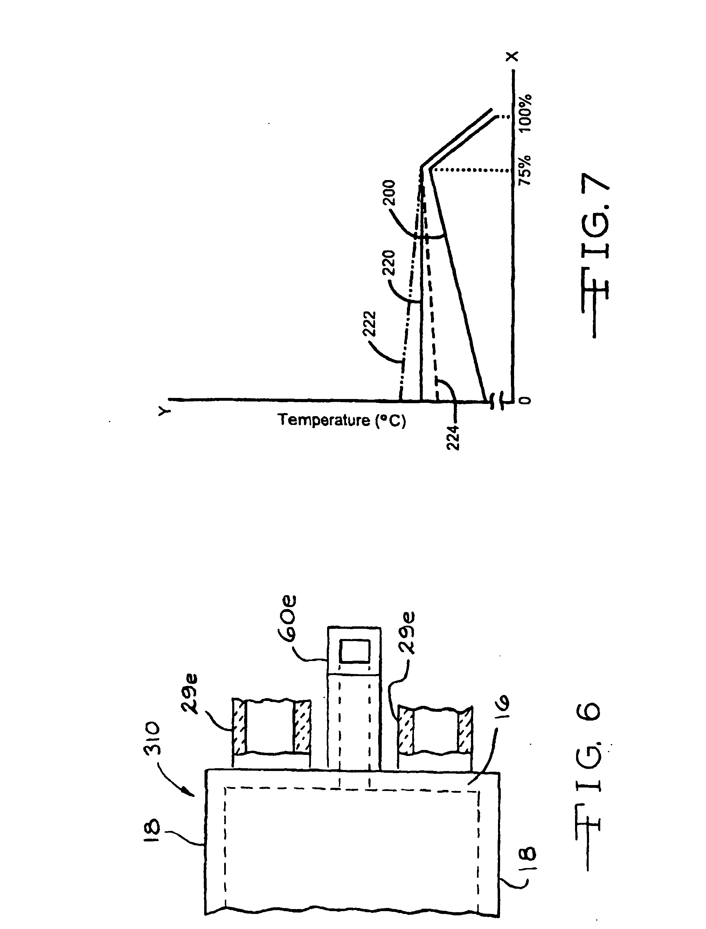

As shown in Figure 6, in another embodiment of the invention, a glass-melting furnace 310 can be provided with one or more exhausts 60e which connects through the end wall 16 to the downstream end 8 of the furnace. Where there is a single exhaust 60e centered on the end wall 16, it is likely that two channels or throats 29e would be used to discharge molten glass from the furnace 310. The exhausts are typically structured and arranged so that they exhibit a relatively lower ambient pressure than the pressure in the furnace. This can be accomplished by using an exhaust in the form of a stack. Alternatively, a fan could be used to lower the pressure within the exhaust. Also, a pressure differential is established between the upstream end 6 of the furnace and a downstream end 8 of the furnace, with the pressure in the downstream end of the furnace being lower than the pressure of the upstream end of the furnace. It can be seen that by exhausting the combustion fumes and gases via the exhaust 60, which is in communication with the downstream end 8 of the furnace, the pressure in the exhaust will be lower than the pressure in the downstream end of the furnace.

Referring now to Figure 7, there is shown a comparison of the temperature (y-axis) and corresponding percentage distance from the charge end wall (x-axis) of the glass-melting furnace to the discharge end wall. Thus, the temperature at the 75 percent distance is the temperature approximately three-fourths of the distance from the charge end wall to the discharge end wall. Likewise, the temperature at the zero percent distance is the temperature at approximately the charge end wall. Likewise, the temperature at the 100 percent distance is the temperature at approximately the discharge end wall.

A typical prior art glass-melting furnace heat profile is indicated at 200. It will be appreciated that the temperature at the approximate 75 percent distance is a relative peak compared to the temperature at the zero percent distance and the 100 percent distance. Thus, the temperature in a conventional glass-melting furnace at the zero percent distance is less than the temperature at the 75 percent distance. Other furnaces might have the peak temperature at different distances from the charge end wall, such as at the 50 percent distance or at the 100 percent distance. A heat profile for the glass-melting furnace according to the invention is indicated at 220. It can be seen that the temperature throughout the first 75 percent of the furnace from the charge end wall is well above that of a conventional furnace, and there is no relatively cold portion at the upstream end of the furnace, in contrast to the conventional furnace heat pattern 200. The relatively low temperature seen at the zero percent distance of the prior art heat profile (graph 200) is not seen with the heat profile (graph 220) for the glass-melting furnace according to the invention. The comparatively higher temperature at the zero percent distance indicates that more efficient energy utilization and glass batch melting is expected with the glass-melting furnace according to the invention. If the furnace is operated with a slightly greater energy input than was the case for the furnace represented by graph 220, the temperature profile will be more elevated at the charge end of the furnace, as shown at graph 222. Likewise, if the furnace is operated with a slightly less energy input than was the case for the furnace represented by graph 220, the temperature profile will be slightly lower at the charge end of the furnace, as shown at graph 224.

Although the invention has been described in detail with reference to certain specific embodiments, those skilled in the art will recognize that there are other embodiments within the scope of the claims enclosed herewith.

## Claims

1. A glass-melting furnace (10) comprising:
an upstream end (6), a downstream end (8), and a roof (22) extending from the upstream to the downstream end, the upstream end being positioned upstream of the downstream end;
a charger (32) to supply glass-forming material (30) to the upstream end of the furnace;
at least one burner (34) to supply heat to the glass-forming material at the upstream end of the furnace; and
an exhaust (60) in communication with the downstream end of the furnace, the exhaust being positioned downstream of the at least one burner (34);
the arrangement being such that the combustion gases produced by the at least one burner can escape through the exhaust.

2. The glass-melting furnace (10) of claim 1 in which the at least one burner (34) is mounted through the roof (22) of the furnace.

3. The glass-melting furnace (10) of claim 1 in which the at least one burner (34) is a plurality of burners.

4. The glass-melting furnace (10) of claim 3 further comprising at least one burner (38) at the downstream end of the furnace in which more than 50 percent of the burners (34) are positioned in the upstream end of the furnace.

5. The glass-melting furnace (10) of claim 4 in which all of the burners (34,38) are positioned upstream of the exhaust (60).

6. The glass-melting furnace (10) of any preceding claim in which the exhaust (60) is an exhaust stack.

7. The glass-melting furnace (10) of any of claims 1 to 5, in which the exhaust (60) is a plurality of exhaust stacks.

8. The glass-melting furnace (10) of any preceding claim in which the exhaust (60) is disposed at a discharge end wall (16) of the furnace.

9. The glass-melting furnace (10) of any of claims 1 to 7, in which the exhaust (60) is disposed at a sidewall (18a, 18b) of the furnace.

10. The glass-melting furnace (110) of claim 1 in which the at least one burner (34) is a plurality of burners mounted through the roof (22) of the furnace, all of the burners are positioned upstream of the exhaust outlets (60a, 60b), and the exhaust comprises at least two exhaust outlets.

11. The glass-melting furnace (110) of claim 10 in which the exhaust outlets (60a, 60b) are a plurality of exhaust stacks.

12. A glass-melting furnace (10) according to any one of claims 1 to 7 or 9 to 11.
the upstream end (6) having a charge end wall (14) and the downstream end (8) having a discharge end wall (16);
the exhaust having a centerline (72) that is positioned at least about 70 percent of the distance from the charge end wall of the furnace to the discharge end wall of the furnace.

13. The glass-melting furnace (10) of claim 12 in which the exhaust centerline (72) is positioned at least about 80 percent of the distance from the charge end wall (14) of the furnace to the discharge end wall (16) of the furnace.

14. The glass-melting furnace (10) of claim 12 wherein the furnace comprises two sidewalls (18a, 18b) and two exhausts (60a, 60b), each exhaust being separated laterally from the sidewalls.

15. A method of operating a glass-melting furnace (10) having an upstream end (6) and a downstream end (8), the method comprising the steps of:
introducing glass-forming material (30) to the upstream end of the furnace;
heating the glass-forming material with at least one burner (34), the at least one burner being located at the upstream end of the furnace; and
exhausting gases of combustion produced by the at least one burner in the furnace from an exhaust (60) positioned at the downstream end of the furnace.

16. The method of claim 15 in which the furnace (10) has a discharge end wall (16) positioned at the downstream end (8) of the furnace, and a charge end wall (14) positioned at the upstream end (6) of the furnace, and further including the step of positioning a centerline (72) of the exhaust (60) at least about 70 percent of the distance from the charge end wall of the furnace to the discharge end wall of the furnace.

17. A method according to claim 15 or claim 16, the furnace having a charge half (80) and a discharge half (84) the method comprising:
introducing glass-forming material (30) to the charge half of the furnace;
heating the glass-forming material with a plurality of burners (34), the burners providing energy and forming gases of combustion, the majority of the energy from the burners being introduced to the furnace in the charge half of the furnace; and
exhausting the gases of combustion from an exhaust (60) connected to the discharge half of the furnace.

18. The method of claim 17 in which a centerline (72) of the exhaust (60) is positioned at least about 80 percent of the distance from a charge end wall (14) of the furnace (10) to a discharge end wall (16) of the furnace.

19. The method of claim 17 in which the step of exhausting includes providing a flow of combustion gases within the furnace (10) in a direction from the charge half (80) of the furnace to the discharge half (84) of the furnace.

20. The method of claim 17 in which the energy from the burners (34) introduced into the charge half (80) of the furnace (10) is at least twice the energy from the burners introduced to the discharge half (84) of the furnace.

21. A method according to any of claims 15 to 20, the method further comprising the steps of :
establishing a pressure differential between the upstream end of the furnace and a downstream end (8) of the furnace, the pressure at the downstream end of the furnace being lower than the pressure at the upstream end of the furnace;
exhausting combustion fumes and gases from the exhaust (60) in communication with the downstream end of the furnace, the pressure at the exhaust being lower than the pressure at the downstream end of the furnace; and
discharging molten glass from the downstream end of the furnace.

## Patentansprüche

1. Glasschmelzofen (10), umfassend:
ein stromaufwärtiges Ende (6), ein stromabwärtiges Ende (8) und eine Decke (22), die sich von dem stromaufwärtigen Ende zu dem stromabwärtigen Ende erstreckt, wobei das stromaufwärtige Ende stromaufwärts von dem stromabwärtigen Ende angeordnet ist;
eine Beschickungseinrichtung (32), um glasbildendes Material (30) dem stromaufwärtigen Ende des Ofens zuzuführen;
mindestens einen Brenner (34), um dem glasbildenden Material an dem stromaufwärtigen Ende des Ofens Wärme zuzuführen; und
einen Abgaskanal (60), der mit dem stromabwärtigen Ende des Ofens in Kommunikation steht, wobei der Abgaskanal stromabwärts von dem mindestens einen Brenner (34) angeordnet ist;
wobei die Anordnung derart ist, dass die Verbrennungsgase, die durch den mindestens einen Brenner erzeugt werden, durch den Abgaskanal entweichen können.

2. Glasschmelzofen (10) nach Anspruch 1, wobei der mindestens eine Brenner (34) durch die Decke (22) des Ofens angebracht ist.

3. Glasschmelzofen (10) nach Anspruch 1, wobei der mindestens eine Brenner (34) eine Mehrzahl von Brennern ist.

4. Glasschmelzofen (10) nach Anspruch 3, weiterhin umfassend mindestens einen Brenner (38) an dem stromabwärtigen Ende des Ofens, wobei mehr als 50 Prozent der Brenner (34) in dem stromaufwärtigen Ende des Ofens angeordnet sind.

5. Glasschmelzofen (10) nach Anspruch 4, wobei alle Brenner (34, 38) stromaufwärts von dem Abgaskanal (60) angeordnet sind.

6. Glasschmelzofen (10) nach einem beliebigen der vorangehenden Ansprüche, wobei der Abgaskanal (60) ein Abgaskanalschacht ist.

7. Glasschmelzofen (10) nach einem beliebigen der Ansprüche 1 bis 5, wobei der Abgaskanal (60) eine Mehrzahl von Abgaskanalschächten ist.

8. Glasschmelzofen (10) nach einem beliebigen der vorangehenden Ansprüche, wobei der Abgaskanal (60) an einer austragsseitigen Wand (16) des Ofens angeordnet ist.

9. Glasschmelzofen (10) nach einem beliebigen der Ansprüche 1 bis 7, wobei der Abgaskanal (60) an einer Seitenwand (18a, 18b) des Ofens angeordnet ist.

10. Glasschmelzofen (110) nach Anspruch 1, wobei der mindestens eine Brenner (34) eine Mehrzahl von Brennern ist, die durch die Decke (22) des Ofens angebracht sind, wobei alle Brenner stromaufwärts von den Abgaskanalauslässen (60a, 60b) angeordnet sind und der Abgaskanal mindestens zwei Abgaskanalauslässe umfasst.

11. Glasschmelzofen (110) nach Anspruch 10, wobei die Abgaskanalauslässe (60a, 60b) eine Mehrzahl von Abgaskanalschächten sind.

12. Glasschmelzofen (10) nach einem beliebigen der Ansprüche 1 bis 7 oder 9 bis 11,
wobei das stromaufwärtige Ende (6) eine beschickungsseitige Wand (14) und das stromabwärtige Ende (8) eine austragsseitige Wand (16) aufweist;
wobei der Abgaskanal eine Mittellinie (72) aufweist, die in mindestens etwa 70 Prozent der Entfernung von der beschickungsseitigen Wand des Ofens zu der austragsseitigen Wand des Ofens angeordnet ist.

13. Glasschmelzofen (10) nach Anspruch 12, wobei die Abgaskanalmittellinie (72) in mindestens etwa 80 Prozent der Entfernung von der beschickungsseitigen Wand (14) des Ofens zu der austragsseitigen Wand (16) des Ofens angeordnet ist.

14. Glasschmelzofen (10) nach Anspruch 12, wobei der Ofen zwei Seitenwände (18a, 18b) und zwei Abgaskanäle (60a, 60b) umfasst, wobei jeder Abgaskanal seitlich von den Seitenwänden getrennt ist.

15. Verfahren zum Betreiben eines Glasschmelzofens (10), der ein stromaufwärtiges Ende (6) und ein stromabwärtiges Ende (8) aufweist, wobei das Verfahren folgende Schritte umfasst:
Einbringen von glasbildendem Material (30) in das stromaufwärtige Ende des Ofens;
Erhitzen des glasbildenden Materials mit mindestens einem Brenner (34), wobei der mindestens eine Brenner an dem stromaufwärtigen Ende des Ofens angeordnet ist; und
Abziehen von Verbrennungsgasen, die durch den mindestens einen Brenner in dem Ofen erzeugt werden, von einem Abgaskanal (60), der an dem stromabwärtigen Ende des Ofens angeordnet ist.

16. Verfahren nach Anspruch 15, wobei der Ofen (10) eine austragsseitige Wand (16) aufweist, die an dem stromabwärtigen Ende (8) des Ofens angeordnet ist, und eine beschickungsseitige Wand (14), die an dem stromaufwärtigen Ende (6) des Ofens angeordnet ist, weiterhin umfassend den Schritt des Anordnens einer Mittellinie (72) des Abgaskanals (60) in mindestens etwa 70 Prozent der Entfernung von der beschickungsseitigen Wand des Ofens zu der austragsseitigen Wand des Ofens.

17. Verfahren nach Anspruch 15 oder Anspruch 16, wobei der Ofen eine Beschickungshälfte (80) und eine Austragshälfte (84) aufweist, wobei das Verfahren umfasst:
Einbringen von glasbildendem Material (30) in die Beschickungshälfte des Ofens;
Erhitzen des glasbildenden Materials mit einer Mehrzahl von Brennern (34), wobei die Brenner Energie bereitstellen und Verbrennungsgase erzeugen, wobei der Großteil der Energie von den Brennern in der Beschickungshälfte des Ofens in den Ofen eingebracht wird; und
Abziehen der Verbrennungsgase von einem Abgaskanal (60), der mit der Austragshälfte des Ofens verbunden ist.

18. Verfahren nach Anspruch 17, wobei eine Mittellinie (72) des Abgaskanals (60) in mindestens etwa 80 Prozent der Entfernung von einer beschickungsseitigen Wand (14) des Ofens (10) zu einer austragsseitigen Wand (16) des Ofens angeordnet ist.

19. Verfahren nach Anspruch 17, wobei der Schritt des Abziehens das Bereitstellen eines Stroms von Verbrennungsgasen innerhalb des Ofens (10) in einer Richtung von der Beschickungshälfte (80) des Ofens zu der Austragshälfte (84) des Ofens umfasst.

20. Verfahren nach Anspruch 17, wobei die Energie von den Brennern (34), welche in die Beschickungshälfte (80) des Ofens (10) eingebracht wird, mindestens das Doppelte der.Energie von den Brennern, welche in die Austragshälfte (84) des Ofens eingebracht wird, ausmacht.

21. Verfahren nach einem beliebigen der Ansprüche 15 bis 20, wobei das Verfahren weiterhin folgende Schritte umfasst:
Herstellen einer Druckdifferenz zwischen dem stromaufwärtigen Ende des Ofens und einem stromabwärtigen Ende (8) des Ofens, wobei der Druck an dem stromabwärtigen Ende des Ofens niedriger als der Druck an dem stromaufwärtigen Ende des Ofens ist;
Abziehen von Verbrennungsschwaden und -gasen von dem Abgaskanal (60), der mit dem stromabwärtigen Ende des Ofens in Kommunikation steht, wobei der Druck an dem Abgaskanal niedriger als der Druck an dem stromabwärtigen Ende des Ofens ist; und
Austragen von geschmolzenem Glas von dem stromabwärtigen Ende des Ofens.

## Revendications

1. Four de fusion de verre (10) comportant :
une extrémité amont (6), une extrémité aval (8) et une voûte (22) s'étendant de l'extrémité amont à l'extrémité aval, l'extrémité amont étant positionnée en amont de l'extrémité aval ;
un dispositif de chargement (32) pour délivrer une matière de formation de verre (30) à l'extrémité amont du four ;
au moins un brûleur (34) pour fournir de la chaleur à la matière de formation de verre au niveau de l'extrémité amont du four ;
un dispositif d'évacuation (60) en communication avec l'extrémité aval du four, le dispositif d'évacuation étant positionné en aval du brûleur (34) ;
la disposition étant telle que les gaz de combustion produits par le brûleur peuvent s'échapper à travers le dispositif d'évacuation.

2. Four de fusion de verre (10) selon la revendication 1, dans lequel le brûleur (34) est monté dans la voûte (22) du four.

3. Four de fusion de verre (10) selon la revendication 1, dans lequel le brûleur (34) est constitué de plusieurs brûleurs.

4. Four de fusion de verre (10) selon la revendication 3, comportant en outre au moins un brûleur (38) au niveau de son extrémité aval, plus de 50 % des brûleurs (34) étant positionnés dans l'extrémité amont du four.

5. Four de fusion de verre (10) selon la revendication 4, dans lequel tous les brûleurs (34, 38) sont positionnés en amont du dispositif d'évacuation (60).

6. Four de fusion de verre (10) selon l'une quelconque des revendications précédentes, dans lequel le dispositif d'évacuation (60) est une cheminée d'évacuation.

7. Four de fusion de verre (10) selon l'une quelconque des revendications 1 à 5, dans lequel le dispositif d'évacuation (60) est constitué de plusieurs cheminées d'évacuation.

8. Four de fusion de verre (10) selon l'une quelconque des revendications précédentes, dans lequel le dispositif d'évacuation (60) est positionné au niveau d'une paroi d'extrémité de déchargement (16) du four.

9. Four de fusion de verre (10) selon l'une quelconque des revendications 1 à 7, dans lequel le dispositif d'évacuation (60) est disposé au niveau d'une paroi latérale (18a, 18b) du four.

10. Four de fusion de verre (110) selon la revendication 1, dans lequel le brûleur (34) est constitué de plusieurs brûleurs montés dans la voûte (22) du four, tous les brûleurs étant positionnés en amont de sorties d'évacuation (60a, 60b), le dispositif d'évacuation comportant au moins deux sorties d'évacuation.

11. Four de fusion de verre (110) selon la revendication 10, dans lequel les sorties d'évacuation (60a, 60b) sont constituées de plusieurs cheminées d'évacuation.

12. Four de fusion de verre (10) selon l'une quelconque des revendications 1 à 7 ou 9 à 11, dans lequel
l'extrémité amont (6) comporte une paroi d'extrémité de chargement (14) et l'extrémité aval (8) une paroi d'extrémité de déchargement (16) ;
le dispositif d'évacuation possède un axe central (72) positionné à au moins environ 70% de la distance allant de la paroi d'extrémité de chargement du four à la paroi d'extrémité de déchargement de celui-ci.

13. Four de fusion de verre (10) selon la revendication 12, dans lequel l'axe central (72) du dispositif d'évacuation est positionné à au moins environ 80% de la distance allant de la paroi d'extrémité de chargement (14) du four à la paroi d'extrémité de déchargement (16) de celui-ci.

14. Four de fusion de verre (10) selon la revendication 12, dans lequel le four comporte deux parois latérales (18a, 18b) et deux dispositif d'évacuation (60a, 60b) dont chacun est séparé latéralement de la paroi latérale correspondante.

15. Procédé pour faire fonctionner un four de fusion de verre (10) ayant une extrémité amont (6) et une extrémité aval (8), procédé comprenant les étapes consistant à :
introduire une matière de formation de verre (30) dans l'extrémité amont du four ;
chauffer la matière de formation de verre à l'aide d'au moins un brûleur (34), le brûleur étant situé au niveau de l'extrémité amont du four ; et
évacuer les gaz de combustion produits dans le four par le brûleur par un dispositif d'évacuation (60) positionné au niveau de l'extrémité aval du four.

16. Procédé selon la revendication 15, dans lequel le four (10) comporte une paroi d'extrémité de déchargement (16) positionnée au niveau de son extrémité aval (8), et une paroi d'extrémité de chargement (14) positionnée au niveau de son extrémité amont (6), et qui comprend en outre l'étape consistant à positionner un axe central (72) du dispositif d'évacuation (60) à au moins environ 70% de la distance allant de la paroi d'extrémité de chargement du four à la paroi d'extrémité de déchargement de celui-ci.

17. Procédé selon la revendication 15 ou la revendication 16, le four comportant une moitié de chargement (80) et une moitié de déchargement (84), procédé comportant les étapes consistant à :
introduire une matière de formation de verre (30) dans la moitié de chargement du four ;
chauffer la matière de formation de verre à l'aide de plusieurs brûleurs (34), les brûleurs fournissant de l'énergie et formant des gaz de combustion, la majorité de l'énergie provenant des brûleurs étant introduite dans le four, dans la moitié de chargement de celui-ci ; et
évacuer les gaz de combustion par un dispositif d'évacuation (60) relié à la moitié de déchargement du four.

18. Procédé selon la revendication 17, dans lequel un axe central (72) du dispositif d'évacuation (60) est positionné à au moins environ 80% de la distance allant d'une paroi d'extrémité de chargement (14) du four (10) à une paroi d'extrémité de déchargement (16) de celui-ci.

19. Procédé selon la revendication 17, dans lequel l'étape d'évacuation comprend la création d'un courant de gaz de combustion dans le four (10), dans une direction allant de la moitié de chargement (80) du four à la moitié de déchargement (84) de celui-ci.

20. Procédé selon la revendication 17, dans lequel l'énergie fournie par les brûleurs (34) et introduite dans la moitié de chargement (80) du four (10) représente au moins le double de l'énergie fournie par les brûleurs et introduite dans la moitié de déchargement (84) du four.

21. Procédé selon l'une quelconque des revendications 15 à 20, procédé comprenant en outre les étapes consistant à :
établir un différentiel de pression entre l'extrémité amont du four et une extrémité aval (8) de celui-ci, la pression au niveau de l'extrémité aval du four étant inférieure à la pression au niveau de l'extrémité amont de celui-ci ;
évacuer des fumées et des gaz de combustion par le dispositif d'évacuation (60) en communication avec l'extrémité aval du four, la pression au niveau du dispositif d'évacuation étant inférieure à la pression au niveau de l'extrémité aval du four ; et
décharger du verre fondu à partir de l'extrémité aval du four.
